(19) Europäisches Patentamt
European Patent Office
Office européen des brevets

(11) **EP 2 920 604 B1**

(12) **FASCICULE DE BREVET EUROPEEN**

(45) Date de publication et mention de la délivrance du brevet:
**02.06.2021 Bulletin 2021/22**

(21) Numéro de dépôt: **13789588.4**

(22) Date de dépôt: **14.11.2013**

(51) Int Cl.:
*G01S 7/38* (2006.01)  *H04L 9/32* (2006.01)
*H04W 12/06* (2021.01)  *H04L 27/32* (2006.01)

(86) Numéro de dépôt international:
**PCT/EP2013/073866**

(87) Numéro de publication internationale:
**WO 2014/076201 (22.05.2014 Gazette 2014/21)**

(54) **SYSTÈME ET PROCÉDÉ DE TAGGAGE RADIOÉLECTRIQUE D'ÉMETTEURS RADIOÉLECTRIQUES**

SYSTEM UND VERFAHREN ZUM FUNK-TAGGING VON FUNKSENDERN

SYSTEM AND METHOD FOR RADIO-TAGGING RADIO TRANSMITTERS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **16.11.2012 FR 1203071**

(43) Date de publication de la demande:
**23.09.2015 Bulletin 2015/39**

(73) Titulaire: **Thales**
**92400 Courbevoie (FR)**

(72) Inventeurs:
• **DELAVEAU, François**
**F-92230 Gennevilliers (FR)**
• **VIRAVAU, Philippe**
**F-92230 Gennevilliers (FR)**
• **GOGUILLON, Patrick**
**F-92230 Gennevilliers (FR)**

(74) Mandataire: **Marks & Clerk France**
**Immeuble "Visium"**
**22, avenue Aristide Briand**
**94117 Arcueil Cedex (FR)**

(56) Documents cités:
**FR-A1- 2 629 655  US-A1- 2010 246 825**

• **KLEIDER J E ET AL: "Radio frequency watermarking for OFDM wireless networks", ACOUSTICS, SPEECH, AND SIGNAL PROCESSING, 2004. PROCEEDINGS. (ICASSP ' 04). IEEE INTERNATIONAL CONFERENCE ON MONTREAL, QUEBEC, CANADA 17-21 MAY 2004, PISCATAWAY, NJ, USA,IEEE, PISCATAWAY, NJ, USA, vol. 5, 17 mai 2004 (2004-05-17), pages 397-400, XP010718949, DOI: 10.1109/ICASSP.2004.1327131 ISBN: 978-0-7803-8484-2**

EP 2 920 604 B1

**EP 2 920 604 B1**

**Description**

L'objet de l'invention concerne un système et un procédé permettant un taggage radioélectrique d'émetteurs radioélectriques au moyen d'un signal secondaire émis simultanément sur la même fréquence et en accompagnement d'un signal principal, ce signal secondaire étant reconnaissable uniquement par des tiers autorisés.

L'invention s'applique à tous les types d'émetteurs ; infrastructures de réseaux de communication ; terminaux ; sondeurs de canaux de propagation ; systèmes d'émission tiers employés pour le contrôle des communications générateurs ou non d'interférences ; etc. dont les signaux principaux sont, dans le cadre de la mise en œuvre de l'invention, accompagnés d'un signal secondaire de taggage présentant des caractéristiques permettant l'identification sans ambiguïté de l'émetteur.

En matière de système radioélectriques et de plate-forme supportant des systèmes d'émission/réception, il est connu d'utiliser un système d'identification d'un utilisateur ami ou autorisé sur des fréquences spécifiques (principe des interrogateurs amis-ennemis IFF ou en anglo-saxon « Identification Friend and Foe »). Un transpondeur de ce type réalise un taggage externe dans la mesure où il répond à une interrogation reconnue comme provenant d'un utilisateur autorisé, en renvoyant une réponse sous forme d'un signal codé spécifiquement pour lesdits récepteurs autorisés.

Dans ces systèmes, les inconvénients majeurs résident dans le fait que les plans de fréquence supportant les échanges d'interrogations/réponses sont fixes et connus, et dans le fait que les signaux sont assez aisément détectables et analysables par des récepteurs tiers. Par exemple les transpondeurs IFF, même dans leurs versions protégées (mode S ou mode 5 connus de l'Homme du métier), reçoivent l'interrogation sur une fréquence connue et normalisée (1 030 MHz), et répondent sur une fréquence tout aussi connue et normalisée (1 090 MHz). Les fréquences 1030 et 1090 MHz peuvent ainsi facilement être surveillées, analysées, voire perturbées par des tiers (interférences).

D'autre part, il est nécessaire de disposer de systèmes émetteurs spécifiques à l'identification, opérant dans des bandes elles aussi spécifiques et généralement très différentes des bandes d'émission des signaux utiles, d'où une augmentation de l'indiscrétion, une vulnérabilité accrue vis à vis de tiers, une augmentation du nombre de composants matériels, des risques accrus pour la compatibilité électromagnétique, etc.

Concernant les réseaux de radiocommunications numériques modernes, il est aussi connu d'inclure des mots de trame, des séquences de synchronisation et des signaux pilotes dans les formes d'ondes à accès multiple par division fréquentielle ou FDMA (Frequency Division Multiple Access), à accès multiple par division temporelle ou TDMA (Time Division Multiple Access), à accès multiple par répartition en code ou CDMA (Code Division Multiple Access) ou dans les modulations de codage par répartition en fréquences orthogonales ou OFDM (Orthogonal Frequency Division Multiplexing) qui permettent à un utilisateur de détecter les réseaux hôtes et de se synchroniser sur des émetteurs d'infratructure, sur des terminaux relais ou sur des noeuds de communication. Le taggage de l'émetteur est réalisé par l'inclusion de ces mots, séquences ou signaux pilotes, ainsi que par des messages codés dans la signalisation diffusée auxquels la détection de ces mots séquences ou signaux pilotes donnent accès. Ce taggage est alors interne au signal utile.

Les systèmes et procédés connus de cet art antérieur présentent notamment comme inconvénient de nécessiter des formes d'ondes et des protocoles d'accès complexes, et d'autant plus complexes qu'une protection est recherchée pour ces mots, séquences, signaux pilotes et messages de signalisation vis à vis de tiers non autorisés. Ces procédés ne s'appliquent donc qu'à certaines catégories restreintes de systèmes d'émission (typiquement des infrastructures et des noeuds de communications dans les réseaux numériques). Ils consomment de plus une part significative de la ressource radioélectrique allouée pour les émissions et pour le fonctionnement global des réseaux qui les mettent en œuvre, aux dépends de la capacité des émetteurs et du réseau. Enfin lorsque les mots, séquences, signaux pilotes et messages de signalisation doivent être protégés vis à vis de tiers non autorisés, les formes d'ondes et protocoles d'accès correspondants se trouvent fortement complexifiés.

La demande de brevet US 2010/0246825 correspond à une technique (bien connue) d'authentification des messages transmis telle qu'utilisée dans les procédés de crypto et de contrôle d'intégrité modernes.

La demande de brevet, FR 2 629 655 A1, concerne l'identification ami-ennemi efficace et décrit un système utilisant un signal d'identification qui a un niveau inférieur aux autres signaux.

Le document de KLEIDER J E ET AL: "Radio frequency watermarking for OFDM wireless networks", frequency watermarking for OFDM wireless networks", ACOUSTICS, SPEECH, AND SIGNAL PROCESSING,2004. PROCEEDINGS. (ICASSP ' 04). IEEE, H04L9/32INTERNATIONAL CONFERENCE ON MONTREAL, QUEBEC, CANADA 17-21 MAY 2004, PISCATAWAY, NJ, USA,IEEE, PISCATAWAY, NJ, USA, H04H60/35 vol. 5, 17 mai 2004 (2004-05-17), pages H04B1/59397-400, XP010718949, divulgue un procédé de Watermarking Radio.

Pour la suite de la description, on définira les notions suivantes :

- Un signal utile, noté $S_u$ dans la suite, est un signal radioélectrique principal provenant d'un émetteur de tout type (infrastructure ou nœud d'un réseau de communication; terminal; sondeurs de canal; systèmes d'émissions employés pour le contrôle des communications dans un réseau, générateurs ou non d'interférences; etc.) ; ainsi, dans le cadre de l'invention, un signal d'interférence pourra être considéré comme un signal utile et noté $S_u$.

2

- Un signal tag ou signal de taggage, noté $C_{tag}$ dans la suite, est un signal secondaire émis en même temps et sur les mêmes bandes de fréquence que le signal utile, mais généralement à des niveaux plus faibles, et qui présente des paramétrages et/ou qui contient des informations reconnaissables par des utilisateurs autorisés à des fins d'identification de l'émetteur du signal utile par des tiers autorisés.

Le procédé et le système selon l'invention reposent notamment sur l'utilisation d'un signal de taggage radioélectrique, construit pour n'être détectable que par des utilisateurs autorisés, l'émission de ce signal de taggage s'effectuant à plus faible puissance que le signal utile mais de manière concommittente, afin que ledit signal de taggage soit (volontairement) interféré « à la source » par le signal utile. Seuls des récepteurs autorisés et informés des caractéristiques du signal de taggage sont capables de le détecter de le reconnaître et de l'interpréter dans le mélange des signaux reçus $S_u + C_{tag}$.

L'invention concerne un système pour tagger radio électriquement un émetteur d'un premier signal utile $S_u$, par un second signal de taggage $C_{tag}$ comprenant des caractéristiques temporelles et fréquentielles paramétrables et adaptées à l'identification de l'émetteur, ledit signal de taggage est émis simultanément en accompagnement du premier signal utile $S_u$, ledit émetteur opérant dans un système comportant plusieurs utilisateurs autorisés et adaptés à reconnaître le second signal de taggage, ledit système comportant au moins les éléments suivants :

Des moyens de génération de signal adaptés:

- à produire un premier signal utile $S_u$ dans une bande de fréquence B donnée, à une fréquence $f_{Su}$ et une amplitude $A_{Su}$, et
- à connaître au moins les valeurs du paramètre de bande $B_{Su}$ du premier signal utile $S_u$ et de l'amplitude $A_{Su}$ du premier signal utile $S_u$, adaptés à déterminer à partir de ces dites valeurs, les paramètres du second signal de taggage $C_{tag}$ comprenant :
- une porteuse du second signal de taggage $C_{tag}$,
- une bande $B_{Ctag}$ du second signal de taggage,
- une amplitude $A_{Ctag}$ du second signal de taggage avec un niveau de signal inférieur de X dB au premier signal utile $X = A_{Ctag}/A_{Su}$
- des caractéristiques temporelles du second signal de taggage $C_{tag}$, incluant :

  - les caractéristiques de modulation du second signal de taggage : une constellation, un rythme $R_{Ctag}$, un filtrage à l'émission,
  - une durée et une période de répétition, $T_{Ctag}$,
  - une description de sa constitution sur la période de répétition $T_{Ctag}$,

Une antenne d'émission adaptée à émettre simultanément ledit premier signal $S_u$ et ledit second signal de taggage dont le niveau est inférieur de X dB au premier signal utile $S_u$,
Des moyens de réception et de traitement du premier signal utile et du second signal de taggage adaptés à détecter et à discriminer le second signal de taggage du premier signal utile.

Le système est, par exemple, un réseau de communication, un réseau de génération de signaux de sondage, ou un réseau de génération de signaux interférants.

La description de la constitution précise du signal de taggage sur une période $T_{Ctag}$ permet la régénération au sein des récepteurs autorisés pour le besoins de leurs traitements.

Le système peut aussi disposer d'un enregistrement préalable en bande de base du signal de taggage $C_{tag}$ sur une période de répétition $T_{Ctag}$, destiné en permettre la relecture au sein des récepteurs autorisés pour les besoins de leur traitements.

Les moyens de génération de signal comportent, par exemple :

- Un premier générateur adapté à produire ledit premier signal utile $S_u$ dans une bande de fréquence $B_{Su}$ donnée, à une fréquence $f_{Su}$ et une amplitude Asu,
- Un deuxième générateur analogique ou numérique connaissant au moins les valeurs du paramètre de bande $B_{Su}$ du premier signal utile $S_u$ et de l'amplitude $A_{Su}$ du premier signal utile $S_u$, adapté à déterminer, à partir de ces dites valeurs, les paramètres du second signal de taggage $C_{tag}$, ou:

  - la porteuse de $C_{tag}$
  - la bande $B_{Ctag}$ de $C_{tag}$,
  - l'amplitude $A_{Ctag}$ de $C_{tag}$,

- les caractéristiques temporelles du second signal de taggage incluant un rythme de modulation (noté $R_{Ctag}$), une période de répétition, notée $T_{Ctag}$,
- la description de sa constitution précise sur une période $T_{Ctag}$ afin de permettre la régénération au sein des récepteurs autorisés pour les besoins de leurs traitements,

- Un système d'enregistrement/ré-émission ou un exciteur numérique, recevant le premier signal utile $S_u$ et le second signal de taggage $C_{tag}$ et adapté à ré-émettre lesdits signaux en en contrôlant les amplitudes et les synchronismes.

Le système peut aussi disposer d'un enregistrement préalable en bande de base du second signal de taggage $C_{tag}$ sur une période de répétition $T_{Ctag}$, destiné à permettre la relecture au sein des récepteurs autorisés pour les besoins de leurs traitements.

Les moyens de génération et d'émission du premier signal utile et du second signal de taggage sont, par exemple, adaptés à produire :

- un signal en bande de base,
- un signal résultant à l'instant t, $S(t)=S_u(t)+(A_{Ctag}/A_{Su}).C_{tag}(t)$, ledit signal résultant $S(t)$ étant obtenu par addition du premier signal utile $S_u(t)$ et du second signal de tagage $C_{tag}(t)$ en bande de base en sortie des deux générateurs, en respectant le rapport des amplitudes $X=A_{Su}/A_{Ctag}$ par application de la pondération $X=A_{Ctag}/A_{Su}$ sur le second signal de taggage $C_{tag}(t)$, puis

à transposer sur une porteuse $f_0$ et à amplifier d'un facteur $A_{Su}$ le signal $S(t)$ issu du mélange, afin de générer en sortie le signal total analogique amplifié sur porteuse $S_{Porteuse}(t) = [A_{Su}.S_u(t)+(A_{Ctag}).C_{tag}(t)].cos(2\pi f_0 t)$.

Les moyens de génération de signal sont, par exemple, composés d'un unique générateur numérique à mémoire programmable et d'un unique étage de conversion numérique analogique transposition et amplification,

- ledit générateur numérique est adapté à être utilisé séquentiellement afin de générer le premier signal utile $S_u$ puis le second signal de taggage $C_{tag}$,
- ledit générateur numérique possède une mémoire programmable,
- et ledit générateur numérique est adapté :

  - à générer le second signal de taggage $C_{tag}(k.T_E)$ et le premier signal utile $S_u(k.T_E)$ en bande de base aux instants d'échantillonnage $t=k.T_E$ avec $T_E$ : la période d'échantillonnage, k : l'indice temporel de l'échantillon k, en respectant la pondération $X=A_{Ctag}/A_{Su}$ sur le second signal de taggage échantillonné $C_{tag}(k.T_E)$, puis,
  - à générer sous forme échantillonnée le mélange résultant $S(k.T_E)=S_u(k.T_E)+(A_{Ctag}/A_{Su}).C_{tag}(k.T_E)$ en bande de base aux instants d'échantillonnage $t=k.T_E$ ,

- ledit étage de conversion numérique analogique transposition et amplification, est adapté à générer le signal total analogique sur porteuse en sortie $S_{Porteuse}(t) = [A_{su}.S_u(t)+(A_{ctag}).C_{tag}(t)].cos(2\pi f_0 t)$ à l'aide de la conversion numérique analogique transformant $S(k.T_E)$ en $S(t)$, de la transposition sur porteuse $f_0$, et de l'amplification d'un facteur $A_{Su}$.

La valeur de X est au moins égale à -10 dB, variant de - 20 dB à - 50 dB.

Selon une variante de réalisation, le dispositif de génération du signal $C_{tag}$ comprend un moyen adapté à générer des codes pseudo-aléatoires PN, de niveau, de période et de composition paramétrables pour former le signal de taggage, ladite composition est obtenue en utilisant l'une des méthodes suivantes :totalement arbitraire, par simulations ou par calculs, par des registres à décalage ou par des combinaisons entre registres à décalage.

Le système peut comporter un générateur de séquences binaires choisies parmi la liste suivante : des séquences binaires de longueur maximale, des séquences de Gold ou de type Gold, des Séquences dual-BCH, des séquences de Kasami simples ou étendues, des séquences de Mac Eliece, des codes de Barker, ou tout autre type de séquence pseudo-aléatoire générée par des procédés algébriques.

Les moyens de réception peuvent comporter une base de données comprenant des caractéristiques de codes utilisés pour la génération du second signal de taggage $C_{tag}$.

L'invention concerne un système d'émission-réception où les moyens de réception sont des moyens de réception informés, comprenant une base de données composée des caractéristiques complètes et de la composition des codes utilisés pour la génération du signal de taggage $C_{tag}$.

L'invention concerne aussi un procédé pour tagger radio électriquement un émetteur d'un premier signal utile $S_u$, par un second signal de taggage $C_{tag}$ comprenant des caractéristiques temporelles et fréquentielles paramétrables, ledit second signal de taggage est émis simultanément en accompagnement du premier signal utile $S_u$, ledit émetteur opérant dans un système comportant plusieurs utilisateurs autorisés et adaptés à reconnaître le second signal de taggage, par des traitements spécifiques, caractérisé en ce qu'il comporte au moins les étapes suivantes :

- produire un premier signal utile $S_u$ dans une bande de fréquence B donnée, à une fréquence $f_{Su}$ et une amplitude $A_{Su}$, et
- connaissant au moins les valeurs du paramètre de bande $B_{Su}$ du signal utile $S_u$ et de l'amplitude $A_{Su}$ du signal utile $S_u$, déterminer à partir de ces dites valeurs, les paramètres du signal de taggage $C_{tag}$ :

  - une porteuse du second signal de taggage $C_{tag}$,
  - une bande $B_{Ctag}$ du second signal de taggage $C_{tag}$,

- l'amplitude $A_{Ctag}$ du second signal de taggage $C_{tag}$ avec un niveau de signal inférieur de X dB au premier signal utile $X=A_{Ctag}/A_{Su}$
- les caractéristiques temporelles du second signal de taggage $C_{tag}$, contenant

  - les caractéristiques de modulation du second signal de taggage : une constellation, un rythme $R_{Ctag}$, un filtrage à l'émission,
  - une durée et une période de répétition, $T_{Ctag}$,
  - la description de sa constitution sur la période de répétition $T_{Ctag}$ adaptée à permettre la régénération au sein des récepteurs autorisés pour le besoins de leurs traitements,

    - pour émettre simultanément ledit premier signal $S_u$ et ledit second signal de taggage dont le niveau est inférieur de X dB au premier signal utile $S_u$,
    - pour discriminer au niveau de la réception du signal, le signal de taggage du signal utile du premier signal utile.

Le procédé est, par exemple, mis en œuvre dans un réseau de communication, un réseau de génération de signaux de sondage, ou un réseau de génération de signaux interférants.

Le procédé peut aussi disposer d'un enregistrement préalable en bande de base du signal de taggage $C_{tag}$ sur une période de répétition $T_{Ctag}$, destiné en permettre la relecture au sein des récepteurs autorisés pour les besoins de leur traitements.

Pour la mise en œuvre du procédé, il est possible d'utiliser des moyens de génération distincts pour produire le premier signal utile $S_u$ et le second signal de taggage $C_{tag}$.

Selon une variante de mise en œuvre du procédé, on génère un signal résultant à l'instant t $S(t)=S_u(t)+(A_{Ctag}/A_{Su}).C_{tag}(t)$ que l'on transpose sur une porteuse $f_0$ et que l'on amplifie d'un facteur $A_{Su}$, pour obtenir un signal sur porteuse amplifié en sortie $S_{Porteuse}(t) = [A_{su}.S_u(t)+(A_{Ctag}).C_{tag}(t)].\cos(2\pi f_0 t)$, ledit signal résultant $S(t)$ étant obtenu par addition des signaux en bande de base en sortie de deux générateurs analogiques ou numériques, en respectant les amplitudes $A_{Su}$ et $A_{Ctag}$ par application d'une pondération $X=A_{Ctag}/A_{Su}$ sur le second signal de taggage dans le signal résultant.

La valeur de X est choisie, par exemple, au moins égale à -10 dB, et de préférence variant de - 20 dB à - 50 dB.

Lors de l'exécution du procédé on génère des codes pseudo-aléatoires PN, de niveau, de période et de composition paramétrables pour former le signal de taggage.

Selon une variante, on utilise des caractéristiques de codes mémorisées dans une base de données afin de discriminer au niveau de la réception du signal, le second signal de taggage $C_{tag}$ du premier signal utile.

Au cours de l'exécution du procédé on utilise, par exemple,

- des moyens de réception informés, comprenant une base de données composée des caractéristiques complètes et de la composition des codes utilisés pour la génération du signal de taggage $C_{tag}$, et
- des techniques de détection de type orienté sur les caractéristiques du signal, basées sur l'emploi de l'auto-corrélation cyclique, premier et second moments, l'estimation du premier moment étant restreinte au domaine des fréquences cycliques proches du rythme de modulation du signal $C_{tag}$ restreinte aux domaines des retards proches de 0 et proches de la période T de répétition du signal $C_{tag}$, l'estimation du second moment étant restreinte au domaine des fréquences cycliques proches du rythme de modulation augmenté du double de la fréquence porteuse.
- des techniques de détection de type informé, basées sur filtrage adapté au signal de taggage $C_{tag}$, filtrage temporel ou spatio-temporel si le récepteur informé dispose d'un réseau d'antennes en réception dont les performances théoriques sont optimales.

D'autres caractéristiques et avantages de la présente invention apparaitront mieux à la lecture de la description qui suit d'un exemple de réalisation donnée à titre illustratif et nullement limitatif annexé des figures qui représentent :

- la figure 1, un schéma général du système selon l'invention,
- la figure 2, un exemple de système émission et de système de réception selon l'invention,
- la figure 3, un exemple de représentation spectrale dans une bande de traitement égale à la bande du sigal de tag $B_{Ctag}$=20 MHz d'un mélange en réception constitué d'un signal Utile $S_u$ (enveloppe I) et d'un signal de taggage $C_{tag}$ (courbe II) de type PN/DSSS sur la bande B de séquence connue de période environ 32768 chips,
- la figure 4, un exemple de représentation spectrale de la sortie du traitement en réception permettant la détection et la reconnaissance (sous forme d'un pic) du signal de taggage $C_{tag}$, avec un rapport signal à bruit + interférence en sortie supérieure à une certaine marge $\eta$ par rapport à un plancher de bruit, et
- la figure 5, un exemple de courbes de probabilité de détection et de fausse alarme d'un signal de taggage en sortie de traitement, selon la valeur du rapport signal à bruit + interférence en sortie SINR'($C_{tag}$).

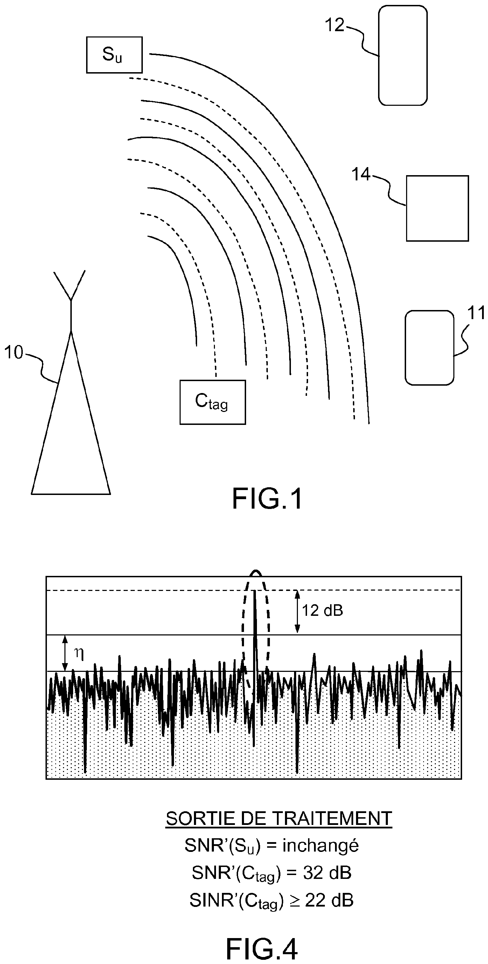

La figure 1 décrit un exemple de mise en œuvre du système selon l'invention pour tagger radio électriquement un émetteur d'un signal utile Su par un second signal de taggage Ctag dont les caractéristiques temporelles et fréquentielles sont paramétrables, en fonction des applications. Le système selon l'invention opère dans un système ou réseau de communication comportant plusieurs utilisateurs.

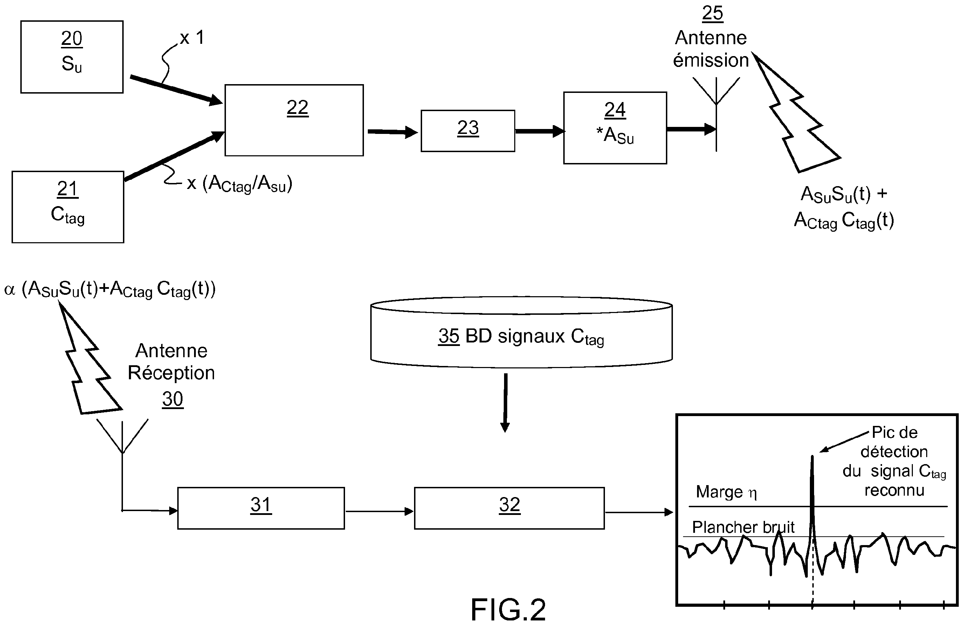

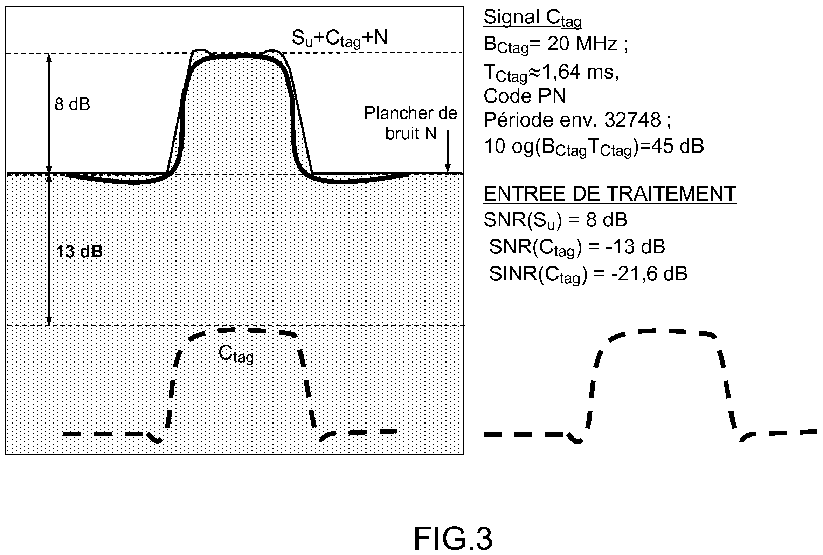

Un dispositif d'émission 10 détaillé à la figure 2 émet un mélange de signaux composé d'un signal utile $S_u$ et d'un signal de taggage $C_{tag}$. Le signal de taggage $C_{tag}$, émis en même temps que le signal utile $S_u$ dans la même bande, sur la même porteuse et à une puissance plus faible, est structuré de manière spécifique et comporte des paramètres précisés ci-après permettant à un utilisateur autorisé de le détecter et de le reconnaître sans ambigüité (cf figure 4), même lorsqu'il est fortement interféré par le signal utile $S_u$ (cf. figure 3). A la réception, les récepteurs autorisés 11, 12 sur le signal $C_{tag}$ comportent des moyens décrits ci-après adaptés à détecter dans le mélange composé du signal utile et du signal de taggage, reconnaître, et le cas échéant décoder le signal de tag $C_{tag}$, alors que les récepteurs non autorisés 14 ne verront que le signal utile dominant $S_u$, sans pouvoir aucunement détecter la présence du signal secondaire $C_{tag}$, et encore moins le reconnaître ou le décoder/déchiffrer.

La figure 2 schématise un exemple de dispositif adapté à émettre simultanément le signal utile $S_u$ et le signal $C_{tag}$. Dans cet exemple, les moyens de génération du signal utile et ceux de génération du signal de taggage sont séparés.

Un premier générateur numérique 20 est adapté à produire un signal utile $S_u$ dans une bande de fréquence B donnée, à une fréquence et une amplitude $A_{Su}$. Le premier générateur peut être analogique ou numérique.

Un deuxième générateur numérique 21 connaissant les valeurs du paramètre de bande $B_{Su}$ du signal utile et de l'amplitude $A_{Su}$ du signal utile $S_u$, va déterminer à partir de ces valeurs, les paramètres du signal de taggage $C_{tag}$. Le deuxième générateur peut être analogique ou numérique. Le paramétrage du signal de tag en fonctionnement normal est fonction des caractéristiques de l'émetteur, puissance, bande, porteuse, et du niveau de protection qu'on souhaite donner. Le signal de tag est, a priori, hétérogène au signal utile, il ne présente pas les mêmes périodes, ou les récurrences, pas le même codage, pas la même modulation.

En pratique :

- la porteuse de $C_{tag}$ est dans la plupart des applications proche ou identique à celle du signal utile,
- la bande $B_{Ctag}$ du signal de taggage est dans la plupart des applications légèrement inférieure ou identique à celle du signal utile $B_{Su}$,
- Les autres paramètres principaux du signal $C_{tag}$ sont notamment :

  - son amplitude $A_{Ctag}$,
  - ses caractéristiques temporelles impactant le traitement des récepteurs autorisés, telles qu'un rythme de modulation (noté $R_{Ctag}$), une période de répétition, notée $T_{Ctag}$,
  - sa structure et sa composition précise, détaillées dans la suite de la description.

Il existe une interdépendance entre les valeurs des différents paramètres, $A_{Su}$, $A_{Ctag}$, $B_{Ctag}$ et $T_{Ctag}$ selon les niveaux de protection recherchés sur le signal $C_{tag}$ et selon la complexité algorithmique visée pour les récepteurs autorisés. Par exemple, le choix des paramètres $A_{Ctag}$ et $T_{Ctag}$ du signal de taggage peut être réglé par les formulations suivantes :

- le niveau de l'amplitude $A_{Ctag}$ du signal de taggage est fixé par une contrainte du type 20.$\log_{10}A_{Ctag}$)=20.$\log_{10}A_{Su}$) - X dB, la valeur de niveau de protection X étant déterminée en fonction des applications et correspond au niveau d'interférence induit par le signal utile Su sur le signal de taggage (SIR($C_{tag}$)=-X), donc à la protection du signal de taggage par le signal utile $S_u$.
- la période caractéristique $T_{Ctag}$, est indexée sur le niveau de protection X, sur la bande du signal de taggage et sur une marge $\eta\square$ par rapport au plancher bruit pour la détection, pour permettre une intégration cohérente dans le traitement en réception. La valeur de la période est alors définie par $10\log_{10}T_{Ctag} = X + \eta\square - 10\log_{10}B_{Ctag}$. La marge

$\eta$ est approximativement fixée dans l'exemple de la figure 4 à la valeur « classique » $\eta \approx 10$ dB.

Le signal $C_{tag}$ est, par exemple, un signal constitué de codes pseudo-aléatoires PN répétés avec une période $T_{tag}$ distincte des périodes du signal utile ou de leurs multiples, et modulé sur deux états de phase (BPSK), avec en général peu de filtrage de la modulaton (pour aider la détection par les récepteurs autorisés), un rythme de modulation inférieur ou égal à la bande du signal utile, sur une porteuse dans la bande du signal utile, afin que le spectre de $C_{tag}$ reste inclus dans la bande $B_{Su}$ du signal utile modulé sur porteuse et qu'il soit bien interféré « à la source » par $S_u$ (et donc protégé vis à vis de tiers non autorisés).

Les générateurs numériques sont adaptés à générer des codes pseudo-aléatoires PN, de niveau, de période et de composition paramétrables, soit totalement arbitraires, soit obtenus par simulations ou par calcul, soit obtenus par des registres à décalage ou par des combinaisons entre registres à décalage.

Le signal $C_{tag}$ est composé, par exemple, à partir de séquences binaires à corrélation optimale ou quasi-optimale, comme par exemple des séquences connues de l'Homme du métier (voir l'article de MM. Sarwate et Pursley : Cross correlation Properties of Pseudorandom and Related Sequences" Proc. IEEE, vol. 68, pp. 593-619, May 1980):

- SBLM(P) : séquences binaires de longueur maximales générées par un polynôme primitif P,
- G(P,Q) : séquences de Gold générées par deux polynômes primitifs P et Q,
- GL(P,Q) : séquences « Gold-like » générées par deux polynômes primitifs P et Q,
- D-BCH : séquences « Dual-BCH » générées par deux polynômes primitifs P et Q,
- KS(P,Q) : séquences de kasami simples générées par deux polynômes primitifs P et Q,
- KE(P,Q) : séquences de kasami étendues générées par deux polynômes primitifs P et Q,
- MCE : séquence de Mc Eliece
- BA : codes de Barker
- etc.

L'un des points essentiel réside dans la composition des signaux de taggage, dans leur combinatoire et dans la qualité de leurs corrélations pour autoriser une relation univoque et non ambigüe entre la composition du signal $C_{tag}$ et l'identité de l'émetteur. Les séquences binaires pseudo-aléatoires précitées présentent, a priori, les meilleurs compromis théoriques de ce point de vue.

Il est aussi possible d'utiliser des séquences arbitraires complètement aléatoires avec de bonnes propriétés de corrélation, générées en grand nombre par simulation, ou connues de l'Homme du métier.

Les informations issues du premier générateur numérique 20 et du deuxième générateur numérique 21 sont transmises à un exciteur numérique 22. En sortie 22s de cet exciteur numérique le signal $S_u$ et le signal de tag $C_{tag}$ sont transmis à un convertisseur analogique numérique 23 puis à un oscillateur local 24 dont une sortie 24s est reliée à une antenne d'émission 25. L'antenne d'émission va donc émettre simultanément un signal $S_u$ et un signal de taggage dont le niveau est inférieur de X dB au signal utile $S_u$. En pratique, cette émission du mélange simultané de signaux $S_u$ et $C_{tag}$ peut être réalisée de plusieurs manières, qui vont être explicitées ci-dessous, à titre illustratif et nullement limitatif.

Dans une chaîne de génération et d'émission numérique l'émission du mélange simultané est par exemple réalisée de la manière suivante : par addition des échantillons de signaux I/Q (en phase et en quadrature de phase) en sortie des deux générateurs numériques 20 et 21, en respectant les amplitudes $A_{Su}$ et $A_{Ctag}$ par application d'une pondération $A_{Ctag}/A_{Cu}$ sur le signal de taggage, pour produire un signal résultant à l'instant t : $S(t)=S_u(t)+(A_{Ctag}/A_{Su}).C_{tag}(t)$ transposé et amplifié d'un facteur $A_{Ctag}$ pour être émis en sortie de la chaîne d'émission sur la porteuse $f_0$. Outre les facilités habituelles de programmation et de contrôle propres aux systèmes de génération numériques, un avantage pratique de ce type de chaîne est la possibilité d'employer séquentiellement avec des latences réduites et une gestion adaptée de mémoire le même générateur numérique de signaux pour produire à la fois $C_{tag}(t)$ et $S_u(t)$ en bande de base et aux instants d'échantillonnage $t=k.T_E$ ($T_E$ : période d'échantillonnage, k : indice temporel de l'échantillon k), puis le mélange $S(t)=S_u(t)+(A_{Ctag}/A_{Su}).C_{tag}(t)$ en bande de base aux instants d'échantillonnage $t=k.T_E$. Le mélange est alors directement injecté dans l'exciteur numérique qui réalise la conversion analogique numérique du mélange, puis envoie le signal analogique résultant dans la chaîne de transposition, 23, + amplification, 24, du facteur $A_{Su}$ + antenne d'émission 25, qui en réalise l'émission amplifiée et sur porteuse.

Selon d'autres variantes de réalisation et selon les capacités offertes par ses composantes et son architecture, il possible, par exemple :

- soit d'additionner au moyen d'un mélangeur adapté des signaux $S_u$ et $C_{tag}$ issus de deux générations numériques parallèles distinctes en bande de base et de deux conversions numérique-analogique parallèles séparées avec un rapport d'amplitude $A_{Ctag}/A_{Su}$, puis d'injecter le mélange dans la chaîne de transposition + amplification (d'un facteur $A_{Su}$) + antenne d'émission.
- soit d'additionner, au moyen d'un mélangeur adapté, des signaux $S_u$ et $C_{tag}$ issus de deux générations analogiques parallèles distinctes en bande de base avec un rapport d'amplitude $A_{Ctag}/A_{Su}$, puis d'injecter le mélange dans la chaîne de transposition + amplification (d'un facteur $A_{Su}$) + antenne d'émission.

- soit d'additionner, au moyen d'un mélangeur adapté, les signaux $S_u$ et $C_{tag}$ issus de chaînes de génération + tranposition analogiques parallèles distinctes avec un rapport d'amplitude $A_{Ctag}/A_{Su}$, puis d'injecter le mélange dans la chaîne d'amplification (d'un facteur $A_{Su}$) + antenne d'émission.
- soit d'additionner, au moyen d'un mélangeur adapté, le signal $S_u$ issu d'une chaîne de génération + tranposition + amplification analogiques à l'amplitude $A_{Su}$, et le signal $C_{tag}$ issu d'une seconde chaîne distincte de génération + tranposition + amplification analogiques à l'amplitude $A_{Ctag}$, puis d'injecter le mélange des signaux amplifiés $A_{Su}.C_{Su}(t)+A_{Ctag}.Ctag(t)$ dans l'antenne d'émission.

Dans les modes de réalisation explicités précédemment pour le taggage du signal, le traitement des signaux au niveau de la réception est similaire. Pour cela, un récepteur autorisé comporte, par exemple une antenne de réception 30 recevant le signal $S_u$ et le signal $C_{tag}$ qui arrivent en même temps avec, lorsqu'ils sont décorellés, un rapport de puissance égal à $(A_{Su}/A_{Ctag})^2$. L'antenne de réception 30 est reliée à un dispositif de traitement comportant des moyens de filtrages 31 et des moyens de traitements 32 adaptés pour notamment :

- transposer le mélange des signaux en bande de base,
- détecter le signal de taggage $C_{tag}$ malgré le degré d'interférence « à la source » généré par le signal utile $S_u$ ,
- reconnaître et estimer les caractéristiques discriminantes du signal $C_{tag}$ servant à identifier l'émetteur sans ambigüité. Ces caractéristiques discriminantes sont principalement la composition des codes PN qui constituent le signal $C_{tag}$ et éventuellement les données qui y peuvent codes dans des messages véhiculés par le signal $C_{tag}$.

Le système peut comporter un moyen d'enregistrement préalable en bande de base du signal de taggage $C_{tag}$ sur une période de répétition $T_{Ctag}$, destiné à permettre la relecture au sein des récepteurs autorisés pour les besoins de leurs traitements.

La reconnaissance et l'estimation des caractéristiques discriminantes peut s'effectuer au moyen de techniques d'estimation statistiques et de filtrage numériques adaptées au signal de taggage $C_{tag}$ et exploitant l'information disponible sur celui-ci, techniques bien connues de l'homme de l'art.

En pratique, le choix du type de récepteur dépend de la nature précise du signal de taggage $C_{tag}$ d'une part et de l'information disponible au niveau du récepteur autorisé d'autre part. Des exemples sont donnés ci-dessous à titre indicatif et nullement limitatif pour un signal $C_{tag}$ composé de séquences PN binaires modulées sur deux états de phase :

- Cas (I1) : l'information du récepteur autorisé est partielle si celui-ci, même sans disposer de la connaissance parfaite de la structure et de la modulation du signal $C_{tag}$, en connaît au moins la période minimale, la porteuse et le rythme. Dans ce cas, l'algorithme de détection utilisé est de type orienté sur les caractéristiques du signal, et préférentiellement basé sur l'emploi de l'autocorrélation cyclique (premier et second moments), l'estimation du premier moment étant restreinte au domaine des fréquences cycliques proches du rythme de modulation du signal $C_{tag}$ et restreinte aux domaines des retards proches de 0 et proches de la période T de répétition du signal $C_{tag}$, l'estimation du second moment étant restreinte au domaine des fréquences cycliques proches du rythme de modulation augmenté du double de la fréquence porteuse.
- Cas (I2) : l'information du récepteur autorisé et informé est complète si celui-ci dispose d'une connaissance parfaite de la structure, de la compositon et de la modulation du signal $C_{tag}$. Dans ce cas, l'algorithme de détection utilisé est de type « informé des séquences de signaux » et préférentiellement, le filtre appliqué est un filtre adapté temporel (ou spatio-temporel si le récepteur autorisé dispose d'un réseau d'antenne en réception) au signal $C_{tag}$, dont les performances théoriques sont optimales.

Le dispositif de détection au niveau du récepteur autorisé, et le cas échéant informé, comporte par ailleurs une base de données 35 à jour comprenant différents codes PN correspondant aux signaux $C_{tag}$ susceptibles d'être émis en tant que signal de tag. La description dans la base de données porte au minimum sur les caractéristiques de rythme, de périodicité et de répétition pour orienter le traitement du récepteur autorisé selon des procédés tels que ceux décrits plus haut (cas (I1)), et le cas échéant sur la composition précise du signal $C_{tag}$ , pour le re-générer au niveau du récepteur informé en vue d'appliquer le filtrage adapté temporel ou spatio-temporel précité (cas (I2)).

Dans le cadre de l'invention, il est donc possible d'introduire aussi différents degrés d'information des récepteurs autorisés, et d'implanter une structure algorithmique avec des traitements progressifs pour limiter la complexité des récepteurs ; par exemple :

- détecter d'abord la présence d'un signal de taggage via la détection de rythmes $R_{Ctag}$, périodes $T_{Ctag}$ de répétition et porteuses recensées en base de données, par une approche du type (I1) ;

- puis reconnaître précisément la composition du code PN constituant le signal de taggage pour identifier sans ambigüité l'émetteur grâce à la grande combinatoire des codes PN disponibles (qui autorise une relation univoque et non ambigüe entre la composition du signal $C_{tag}$ et l'identité de émetteur), par une approche du type (I2).

Le niveau d'émission relatif -X (en dB) (niveau de protection) du signal de taggage $C_{tag}$ par rapport au signal utile $S_u$ est par exemple d'au moins -10 dB, et de préférence de -20 dB à -50 dB.

Au niveau de l'entrée du traitement en réception, la valeur du rapport de l'amplitude du signal de taggage $C_{tag}$ par rapport à l'amplitude du signal utile $S_u$ et à celle de bruit de réception, est

$$SINR(C_{tag})=20.\log_{10}(A_{ctag}/(A_{Su}^2+\sigma_N^2)^{1/2})$$

Au niveau de la sortie du traitement en réception informé du type correspondant au cas (I2), rapport de l'amplitude du signal de taggage $C_{tag}$ par rapport à l'amplitude du signal utile $S_u$ et à celle de bruit de réception, est, après traitement

$$SINR'(C_{tag})= SINR(C_{tag}) + 10.\log_{10}(B_{tag}.T_{tag}).$$

Pour détecter et identifier le signal de tag $C_{tag}$ sans ambigüité et avec un taux de fausse alarme réduit, on cherchera dans la mise en œuvre de l'invention :

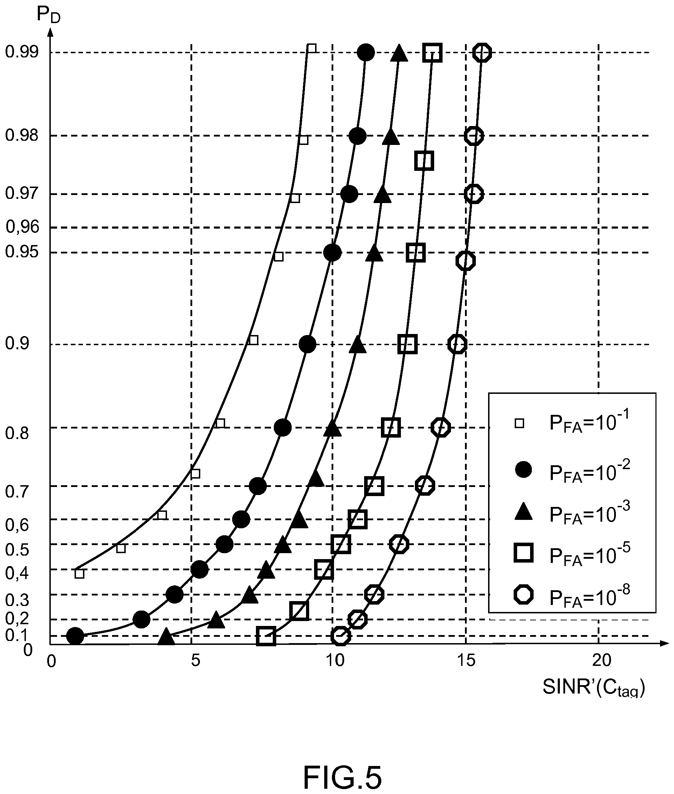

- à rendre d'une part le rapport $SINR'(C_{tag})$ supérieure à une certaine marge $\eta$, par exemple une marge $\eta=10$ dB. Dans ce cas, les probabilités de détection ($P_D$, $P_{FA}$) élémentaires seront typiquement de l'ordre de ($P_D=0,95$ ; $P_{FA}=10^{-2}$) ou ($P_{D=}0,99$ ; $P_{FA}=4.10^{-2}$), etc. (courbes de la figure 5) selon les seuillages appliqués pour décréter une détection dite élémentaire d'après la valeur de $SINR'(C_{tag})$,
- à post intégrer les détections élémentaires réalisées à l'aide d'une logique simple exploitant la répétition des détections élémentaires pour obtenir de meilleures valeurs Pd'/Pfa' en sortie. Par exemple avec une logique qui consiste à décréter la détection à la suite de 4 détections élémentaires consécutives (les détections élémentaires étant groupées en paquets disjoints de 4)

    o des probabilités « élémentaires » ($P_D$, $P_{FA}$) de ($0,95$; $10^{-2}$) conduiront à des probabilités post-intégrées ($P_D'$, $P_{FA}$) de l'ordre de ($0,8$ ; $10^{-8}$)
    o des probabilités « élémentaires » ($P_D$, $P_{FA}$) de l'ordre de ($0,99$ ; $4.10^{-2}$) conduiront à des probabilités post-intégrées ($P_D'$, $P_{FA}$) de l'ordre de ($0,96$ ; $2,610^{-6}$)

Des exemples quantifiés vont être maintenant donnés afin d'illustrer la mise en œuvre de l'invention.

Exemple 1 (mise en œuvre a minima)

Signal de taggage de type bruit blanc ou séquence PN modulées BPSK Période et durée d'intégration $T_{Ctag}$ = $100.10^{-6}$ s, avec $B_{Ctag}=B_{Su}=20$ MHz, d'où $10.\log(B_{tag}T_{tag}) = 23$ dB
En entrée :

$$SINR(C_{tag})=20.\log[A_{Ctag}/(A_{Ctag}^2+\sigma_N^2)^{1/2}]=-10 \text{ dB}$$

En sortie : $SINR'(C_{tag})= +13$ dB environ laissant 3 dB supplémentaires par rapport à la marge habituelle de $\eta=10$ dB, ce qui permet de compenser une légère perte de gain liée à des décalages Doppler ou des oscillateurs locaux mal/non compensés, sans besoin de réjection ou de traitement autre. La durée d'intégration courte de la détection élémentaire rend celle-ci assez peu sensible aux fluctuations rapides de la propagation, la post intégration d'un nombre significatif de détections élémentaires (typiquement de 4 à 8) permet, le cas échéant, d'abaisser les seuils de détection et de tolérer des probabilités de fausse alarme élémentaires de l'ordre de $10^{-1}$ (un peu plus élevées que la normale), et par conséquent de renforcer la sensibilité globale du traitement sans pénaliser sa fiabilité ni induire de complexité supplémentaire.

Exemple 2 (mise en œuvre nominale) correspondant aux figures 3 et 4.

Signal de taggage de type PN/DSSS modulé BPSK
Période et durée d'intégration $T_{Ctag}=1640.10^{-6}$ s, avec $B_{Ctag}=B_{Su}=20$ MHz, d'où $10.\log(B_{tag}T_{tag}) = 45$ dB

En entrée :

$$SINR(C_{tag})=20.log[A_{Ctag}/(A_{Ctag}^2+\sigma_N^2)^{1/2}]=-21,6 \text{ dB}$$

En sortie : SINR'($C_{tag}$) ≥ 23 dB environ laissant 13 dB supplémentaires par rapport à la marge habituelle η = 10 dB, ce qui permet de compenser une perte significative de gain liées à des décalages Doppler ou des oscillateurs locaux mal compensés ou à des fluctuations sévères de propagation (fading, masquages) sans besoin de réjection ou de post traitement autre (Nota :dans la mise en œuvre réalisée figure 2, le pic excède la partie supérieure du plancher de bruit d'environ 22 dB).

La figure 3, donne un exemple de représentation spectrale dans une bande de traitement égale à la bande du signal de tag $B_{Ctag}$=20 MHz d'un mélange en réception constitué d'un signal Utile $S_u$ (enveloppe I) et d'un signal de taggage $C_{tag}$ (courbe II) de type PN/DSSS sur la bande B de séquence connue de période environ 32768 chips. Sur cet exemple le signal de taggage est 21 dB sous le signal utile $S_u$ et 13 dB sous le plancher de bruit N supposé blanc Gaussien (puissance de bruit N=$\sigma_N^2$, $\sigma_N$ : écart type de la distribution du bruit reçu dans la bande la $B_{Ctag}$ qui coïncide dans cet exemple avec la bande de traitement en réception), le rapport SIR($C_{tag}$)=20.log$_{10}$($A_{ctag}/A_{Su}$) est donc -21 dB, le rapport SNR($C_{tag}$)=20.tog$_{10}$($A_{ctag}/\sigma_N$) est donc -13 dB, et le rapport SINR($C_{tag}$)=20.log$_{10}$($A_{ctag}/(A_{Su}^2+\sigma_N^2)^{1/2}$) est donc environ - 21,6 dB.

La figure 4, est un exemple de représentation de la sortie du traitement en réception permettant la détection et la reconnaissance (sous forme d'un pic) du signal de taggage $C_{tag}$, avec un rapport signal à bruit + interférence en sortie supérieure à une certaine marge η par rapport à un plancher de bruit, ce qui s'écrit formellement SINR'($C_{tag}$) > η. Dans l'exemple de la figure 4 la marge de détection habituelle par rapport au plancher de bruit serait η≈10 dB, mais la valeur du pic excède cette marge η□d'environ 12 dB.

**Exemple 3** (mise en œuvre extrémale)

Signal de taggage de type PN/DSSS modulée BPSK
Période et durée d'intégration $T_{Ctag}$=1 00000.10$^{-6}$ s, avec $B_{Ctag}$=$B_{Su}$=20 MHz, d'où 10.log($B_{tag}T_{tag}$) = 63 dB
En entrée :

$$SINR(C_{tag})=20.log[A_{Ctag}/(A_{Ctag}^2+\sigma_N^2)^{1/2}]=-50 \text{ dB}$$

En sortie : SINR'($C_{tag}$) ≥ +13 dB environ laissant 3 dB supplémentaires par rapport à la marge habituelle η = 10 dB. Vu la longueur de la période et de la durée d'intégration $T_{Ctag}$=0,1s, les risques de pertes de gain liées à des décalages Doppler, à des oscillateurs locaux mal compensés ou à des fluctuations rapides et sévères de propagation durant la durée d'intégration sur $T_{Ctag}$ (fadings, masquages) doivent être traités par une gestion d'hypothèses Doppler et par une post-intégration adaptée telle que décrite plus haut.

Avec des hypothèses supplémentaires, telles qu'un contrôle de la qualité d'émission et une connaissance suffisante par le récepteur autorisé du Signal utile dominant $S_u$, il existe des traitements améliorateurs basés sur l'estimation du signal utile $S_u$ dans le mélange en réception et sa soustraction dans le mélange pour améliorer en amont le contraste sur le signal $C_{tag}$ avant l'application des traitements décrits plus haut.

Le procédé et le système selon l'invention peuvent donc notamment être utilisés pour tagger des signaux d'interférences ayant notamment pour fonction de gêner le fonctionnement de systèmes de réception donnés. Dans ce cas, le signal utile est le signal d'interférence et le signal de tag émis simultanément contient des informations utiles au récepteur autorisé, ce qui conduit à une reconnaissance de l'émetteur du signal interférant par les récepteurs autorisés, qui, de ce fait, ne sont pas, eux, pénalisés par ledit signal interférant $S_u$.

Le procédé et le système selon l'invention présentent notamment les avantages suivants :

- le signal de taggage est furtif car émis en même temps et sur les mêmes bandes que le signal utile, à un niveau plus faible que ce dernier,
- le signal de taggage est protégé contre les risques d'interception et d'analyse par des tiers en raison des interférences induites « à la source » par le signal utile au niveau de tout système de réception employée par ces tiers,
- le signal de taggage n'est reconnaissable que par des tiers autorisés et informés,
- le signal de taggage ne nécessite pas l'utilisation de fréquences supplémentaires en fonctionnement normal, ni d'émetteurs spécifiques a priori. Toutefois, il peut aussi employer un émetteur secondaire réglé en fonction de l'émetteur du signal utile, colocalisé ou non avec ce dernier, sur les mêmes bandes ou non,
- le signal de taggage est émis à une puissance faible par rapport au signal utile,

- le signal de taggage n'entre que très peu en compte dans le bilan de liaison entre le signal émis par l'utilisateur autorisé, et il ne consomme que très peu de ressource spectrale par rapport au signal utile. Il ne pénalise de ce fait aucunement la capacité d'un émetteur de communications ou d'un réseau d'émetteurs de communication mettant en œuvre le procédé selon l'invention,
- le signal de taggage n'induit que très peu de consommation énergétique supplémentaire.

**Revendications**

1. Système pour tagger radio électriquement un émetteur d'un premier signal utile $S_u$, par un second signal de taggage $C_{tag}$ comprenant des caractéristiques temporelles et fréquentielles paramétrables, ledit signal de taggage est émis simultanément en accompagnement du premier signal utile $S_u$, ledit émetteur opérant dans un système ou un réseau de communication, dans un système comportant plusieurs utilisateurs autorisés et adaptés à reconnaître le second signal de taggage, ledit système comportant au moins les éléments suivants :

   Des moyens de génération (20, 21, 22) de signal adaptés :

   - à produire un premier signal utile $S_u$ dans une bande de fréquence B donnée, à une fréquence $f_{Su}$ et une amplitude $A_{Su}$, et
   - à connaître au moins les valeurs du paramètre de bande $B_{Su}$ du premier signal utile $S_u$ et de l'amplitude $A_{Su}$ du premier signal utile $S_u$, adaptés à déterminer à partir de ces dites valeurs, les paramètres du second signal de taggage $C_{tag}$ comprenant :
   - une porteuse du second signal de taggage $C_{tag}$,
   - une bande $B_{Ctag}$ du second signal de taggage,
   - une amplitude $A_{Ctag}$ du second signal de taggage avec un niveau de signal inférieur de X dB au premier signal utile $X=A_{Ctag}/A_{Cu}$,
   - des caractéristiques temporelles du second signal de taggage $C_{tag}$, incluant :
   - les caractéristiques de modulation du second signal de taggage :
   une constellation, un rythme $R_{Ctag}$, un filtrage à l'émission,
   - une durée et une période de répétition, $T_{Ctag}$,
   - une description de sa constitution sur la période de répétition $T_{Ctag}$,

   Une antenne d'émission (25) adaptée à émettre simultanément ledit premier signal utile $S_u$ et ledit second signal de taggage dont le niveau est inférieur de X dB au premier signal utile $S_u$,
   Des moyens de réception et de traitement (30, 31, 32) du premier signal utile et du second signal de taggage adaptés à détecter et à discriminer le second signal de taggage du premier signal utile.

2. Système selon la revendication 1 **caractérisé en ce que** les moyens de génération de signal comportent :

   - Un premier générateur (20) adapté à produire ledit premier signal utile $S_u$ dans une bande de fréquence $B_{Su}$ donnée, à une fréquence $f_{Su}$ et une amplitude $A_{Su}$,
   - Un deuxième générateur (21) connaissant au moins les valeurs du paramètre de bande $B_{Su}$ du premier signal utile $S_u$ et de l'amplitude $A_{Su}$ du premier signal utile $S_u$, adapté à déterminer, à partir de ces dites valeurs, les paramètres du second signal de taggage $C_{tag}$, :

      - la porteuse de $C_{tag}$
      - la bande $B_{Ctag}$ de $C_{tag}$,
      - l'amplitude $A_{Ctag}$ de $C_{tag}$,
      - les caractéristiques temporelles du second signal de taggage incluant un rythme de modulation (noté $R_{Ctag}$), une période de répétition, notée $T_{Ctag}$,
      - la description de sa constitution précise sur une période $T_{Ctag}$,

   - Un système d'enregistrement/ré-émission (22), ou un exciteur numérique (22), recevant le premier signal utile $S_u$ et le second signal de taggage $C_{tag}$ et adapté à ré-émettre lesdits signaux en en contrôlant les amplitudes et les synchronismes .

3. Système selon l'une des revendications 1 ou 2 **caractérisé en ce qu'**il comporte d'un moyen d'enregistrement préalable en bande de base du second signal de taggage $C_{tag}$ sur une période de répétition $T_{Ctag}$, adapté à permettre la relecture au sein des récepteurs autorisés pour les besoins de leur traitements.

4. Système selon l'une des revendications 1 à 2 **caractérisé en ce que** les moyens de génération et d'émission du premier signal utile et du second signal de taggage sont adaptés :

- à produire :

- un signal en bande de base,
- un signal résultant à l'instant t, $S(t)=S_u(t)+(A_{Ctag}/A_{Su}).C_{tag}(t)$, ledit signal résultant $S(t)$ étant obtenu par addition du premier signal utile $S_u(t)$ et du second signal de taggage $C_{tag}(t)$ en bande de base en sortie des deux générateurs (20, 21), en respectant le rapport des amplitudes $X=A_{Su}/A_{Ctag}$ par application de la pondération $X=A_{Ctag}/A_{Su}$ sur le second signal de taggage $C_{tag}(t)$, puis

- à transposer sur une porteuse $f_0$ et à amplifier d'un facteur $A_{Su}$ le signal $S(t)$ issu du mélange, afin de générer en sortie le signal total analogique amplifié sur porteuse $S_{Porteuse}(t) = [A_{Su}.S_u(t)+(A_{Ctag}).C_{tag}(t)].\cos(2\pi f_0 t)$.

5. Système selon la revendication 1 **caractérisé en ce que** les moyens de génération de signal sont composés : D'un unique générateur numérique à mémoire programmable et d'un unique étage de conversion numérique analogique transposition et amplification,

- ledit générateur numérique est adapté à être utilisé séquentiellement afin de générer le premier signal utile $S_u$ puis le second signal de taggage $C_{tag}$,
- ledit générateur numérique possède une mémoire programmable
- et ledit générateur numérique est adapté :

- à générer le second signal de taggage $C_{tag}(k.T_E)$ et le premier signal utile $S_u(k.T_E)$ en bande de base aux instants d'échantillonnage $t=k.T_E$ avec $T_E$: la période d'échantillonnage, k : l'indice temporel de l'échantillon k, en respectant la pondération $X=A_{Ctag}/A_{Su}$ sur le second signal de taggage échantillonné $C_{tag}(k.T_E)$, puis,
- à générer sous forme échantillonnée le mélange résultant $S(k_{.TE})=S_u(k.T_E)+(A_{Ctag}/A_{Su}).C_{tag}(k.T_E)$ en bande de base aux instants d'échantillonnage $t=k.T_E$

- ledit étage de conversion numérique analogique transposition et amplification, est adapté à générer le signal total analogique sur porteuse en sortie $S_{Porteuse}(t) = [A_{Su}.S_u(t)+(A_{Ctag}).C_{tag}(t)].\cos(2\pi f_0 t)$ à l'aide de la conversion numérique analogique transformant $S(k.T_E)$ en $S(t)$, de la transposition sur porteuse $f_0$, et de l'amplification d'un facteur $A_{Su}$.

6. Système selon l'une des revendications 1 à 5 **caractérisé en ce que** la valeur de X est au moins égale à -10 dB, variant de - 20 dB à - 50 dB.

7. Système selon l'une des revendications 1 à 6 **caractérisé en ce que** le dispositif de génération du signal $C_{tag}$ comprend un moyen adapté à générer des codes pseudo-aléatoires PN, de niveau, de période et de composition paramétrables pour former le signal de taggage, ladite composition est obtenue en utilisant l'une des méthodes suivantes : totalement arbitraires, par simulations ou par calculs, par des registres à décalage ou par des combinaisons entre registres à décalage.

8. Système selon la revendication 7 **caractérisé en ce qu'**il comporte un générateur de séquences binaires choisies parmi la liste suivante : des séquences binaires de longueur maximale, des séquences de Gold ou de type Gold, des Séquences dual-BCH, des séquences de Kasami simples ou étendues, des séquences de Mac Eliece, des codes de Barker, ou tout autre type de séquence pseudo-aléatoire générée par des procédés algébriques.

9. Système selon l'une des revendications 1 à 8 **caractérisé en ce que** les moyens de réception comportent une base de données (35) comprenant des caractéristiques de codes utilisés pour la génération du second signal de taggage $C_{tag}$.

10. Système d'émission-réception selon l'une des revendications 1 à 8 **caractérisé en ce que** les moyens de réception sont des moyens de réception informés, comprenant une base de données (35) composée des caractéristiques complètes et de la composition des codes utilisés pour la génération du second signal de taggage $C_{tag}$.

**11.** Procédé pour tagger radio électriquement un émetteur d'un premier signal utile $S_u$, par un second signal de taggage $C_{tag}$ comprenant des caractéristiques temporelles et fréquentielles paramétrables, ledit second signal de taggage est émis simultanément en accompagnement du premier signal utile $S_u$, ledit émetteur opérant dans un système comportant plusieurs utilisateurs autorisés et adaptés à reconnaître le second signal de taggage, **caractérisé en ce qu'**il comporte au moins les étapes suivantes :

- produire un premier signal utile $S_u$ dans une bande de fréquence B donnée, à une fréquence $f_{Su}$ et une amplitude $A_{Su}$, et
- connaissant au moins les valeurs du paramètre de bande $B_{Su}$ du premier signal utile $S_u$ et de l'amplitude $A_{Su}$ du signal utile $S_u$, déterminer à partir de ces dites valeurs, les paramètres du second signal de taggage $C_{tag}$ comprenant:

- une porteuse du second signal de taggage $C_{tag}$,
- une bande $B_{Ctag}$ du second signal de taggage $C_{tag}$,

- l'amplitude $A_{Ctag}$ du second signal de taggage $C_{tag}$ avec un niveau de signal inférieur de X dB au premier signal utile $X=A_{Ctag}/A_{Su}$
- les caractéristiques temporelles du second signal de taggage $C_{tag}$, contenant :

• les caractéristiques de modulation du second signal de taggage : une constellation, un rythme $R_{Ctag}$, un filtrage à l'émission,
• une durée et une période de répétition, $T_{Ctag}$,
• la description de sa constitution sur la période de répétition $T_{Ctag}$ adaptée à permettre la régénération au sein des récepteurs autorisés pour le besoins de leurs traitements,

- émettre (25) simultanément ledit premier signal $S_u$ et ledit second signal de taggage dont le niveau est inférieur de X dB au premier signal utile $S_u$,
- discriminer (30, 31, 32) au niveau de la réception du signal, le second signal de taggage du signal utile du premier signal utile.

**12.** Procédé selon la revendication 11 **caractérisé en ce que** le procédé utilise des moyens de génération distincts pour produire le premier signal utile $S_u$ et le second signal de taggage $C_{tag}$.

**13.** Procédé selon l'une des revendications 11 ou 12 **caractérisé en ce que** le procédé génère un signal résultant à l'instant t $S(t)=S_u(t)+(A_{Ctag}/A_{Su}).C_{tag}(t)$ , transposé sur une porteuse $f_0$ et amplifié d'un facteur $A_{Su}$, pour obtenir un signal sur porteuse amplifié en sortie $S_{Porteuse}(t) = [A_{su}.S_u(t)+(A_{Ctag}).C_{tag}(t)].cos(2\pi f_0 t)$, ledit signal résultant $S(t)$ étant obtenu par addition des signaux en bande de base en sortie de deux générateurs analogiques ou numériques (20, 21), en respectant les amplitudes $A_{Su}$ et $A_{Ctag}$ par application d'une pondération $X=A_{Ctag}/A_{Su}$ sur le second signal de taggage dans le signal résultant.

**14.** Procédé selon l'une des revendications 11 à 13 **caractérisé en ce qu'**une valeur de X est choisie au moins égale à -10 dB, et de préférence variant de - 20 dB à-50 dB.

**15.** Procédé selon l'une des revendications 11 à 14 **caractérisé en ce que** le procédé génère des codes pseudo-aléatoires PN, de niveau, de période et de composition paramétrables pour former le second signal de taggage.

**16.** Procédé selon l'une des revendications 11 à 15 **caractérisé en ce que** le procédé utilise des caractéristiques de codes mémorisées dans une base de données (35) afin de discriminer au niveau de la réception du signal, le second signal de taggage $C_{tag}$ du signal utile.

**17.** Procédé selon l'une des revendications 11 à 15 **caractérisé en ce que** le procédé utilise :

- des moyens de réception informés, comprenant une base de données composée des caractéristiques complètes et de la composition des codes utilisés pour la génération du second signal de taggage $C_{tag}$, et
- des techniques de détection de type orienté sur les caractéristiques du signal, basées sur l'emploi de l'auto-corrélation cyclique, l'estimation du premier moment étant restreinte au domaine des fréquences cycliques proches du rythme de modulation du second signal $C_{tag}$ restreinte aux domaines des retards proches de zéro et proches de la période T de répétition du second signal $C_{tag}$, l'estimation du second moment étant restreinte au domaine des fréquences cycliques proches du rythme de modulation augmenté du double de la fréquence porteuse.
- des techniques de détection de type informé, basées sur filtrage adapté au second signal de taggage $C_{tag}$.

**Patentansprüche**

1. System zum Funk-Tagging eines Senders eines ersten Nutzsignals $S_u$, durch ein zweites Tagging-Signal $C_{tag}$, welches parametrierbare Zeit-und Frequenzmerkmale umfasst, wobei das Tagging-Signal gleichzeitig als Begleitung des ersten Nutzsignals $S_u$ ausgesendet wird, wobei der Sender in einem System oder einem Kommunikationsnetz arbeitet, in einem System, welches mehrere autorisierte und dazu geeignete Benutzer umfasst, das zweite Tagging-Signal zu erkennen, wobei das System mindestens folgende Elemente umfasst:

Signalerzeugungsmittel (20, 21, 22), welche geeignet sind zum:

- Erzeugen eines ersten Nutzsignals $S_u$ in einem gegebenen Frequenzband B, mit einer Frequenz $f_{Su}$ und einer Amplitude $A_{Su}$, und
- Kennen zumindest der Werte des Bandparameters $B_{Su}$ des ersten Nutzsignals $S_u$, und der Amplitude $A_{Su}$ des ersten Nutzsignals $S_u$, welche geeignet sind, um anhand dieser Werte die Parameter des zweiten Tagging-Signals $C_{tag}$ zu bestimmen, welches Folgendes umfasst:
- einen Träger des zweiten Tagging-Signals $C_{tag}$,
- ein Band $B_{Ctag}$ des zweiten Tagging-Signals,
- eine Amplitude $A_{Ctag}$ des zweiten Tagging-Signals mit einem Signalpegel, welcher um X dB niedriger als das erste Nutzsignal ist $X=A_{Ctag}/A_{Su}$,
- Zeitmerkmale des zweiten Tagging-Signals $C_{tag}$, Folgendes einschließend:
- die Modulationsmerkmale des zweiten Tagging-Signals: eine Konstellation, einen Rhythmus $R_{Ctag}$, eine Filterung bei der Aussendung,
- eine Dauer und eine Wiederholungsperiode $T_{Ctag}$,
- eine Beschreibung seines Aufbaus über die Wiederholungsperiode $T_{Ctag}$,

eine Sendeantenne (25), welche geeignet ist, gleichzeitig das erste Nutzsignal $S_u$ und das zweite Tagging-Signal auszusenden, dessen Pegel um X dB niedriger als derjenige des ersten Nutzsignals $S_u$ ist,
Mittel für Empfang und Verarbeitung (30, 31, 32) des ersten Nutzsignals und des zweiten Tagging-Signals, welche geeignet sind, das zweite Tagging-Signal zu erkennen und vom ersten Nutzsignal zu diskriminieren.

2. System nach Anspruch 1, **dadurch gekennzeichnet, dass** die Signalerzeugungsmittel Folgendes umfassen:

- einen ersten Generator (20), welcher zum Erzeugen des ersten Nutzsignals $S_u$ in einem gegebenen Frequenzband $B_{Su}$, mit einer Frequenz $f_{Su}$ und einer Amplitude $A_{Su}$ geeignet ist,
- einen zweiten Generator (21), welcher zumindest die Werte des Bandparameters $B_{Su}$ des ersten Nutzsignals $S_u$ und der Amplitude $A_{Su}$ des ersten Nutzsignals $S_u$ kennt, welcher geeignet ist, anhand dieser Werte die Parameter des zweiten Tagging-Signals $C_{tag}$ zu bestimmen:
- das Trägersignal von $C_{tag}$
- das Band $B_{Ctag}$ von $C_{tag}$,
- die Amplitude $A_{Ctag}$ von $C_{tag}$,
- wobei die Zeitmerkmale des zweiten Tagging-Signals einen ModulationsRhythmus (bezeichnet als $R_{Ctag}$) und eine Wiederholungsperiode, bezeichnet als $T_{Ctag}$ einschließen,
- die Beschreibung seines genauen Aufbaus über eine Periode $T_{Ctag}$,
- ein System zur Aufzeichnung/Neuaussendung (22), oder einen digitalen Erreger (22), welches/welcher das erste Nutzsignal $S_u$ und das zweite Tagging-Signal $C_{tag}$ empfängt und geeignet ist, die Signale neu auszusenden, indem es/er deren Amplituden und Synchronismen steuert.

3. System nach einem der Ansprüche 1 oder 2, **dadurch gekennzeichnet, dass** es ein Mittel zur vorherigen Aufzeichnung des zweiten Tagging-Signals $C_{tag}$ im Basisband über eine Wiederholungsperiode $T_{Ctag}$ umfasst, welches geeignet ist, die Ablesung innerhalb der autorisierten Empfänger zum Bedarf ihrer Verarbeitungen zu ermöglichen.

4. System nach einem der Ansprüche 1 oder 2, **dadurch gekennzeichnet, dass** die Mittel zur Erzeugung und Aussendung des ersten Nutzsignals und des zweiten Tagging-Signals geeignet sind zum:

- Produzieren:
- eines Signals im Basisband,
- eines resultierenden Signals zum Zeitpunkt t, $S(t)=S_u(t)+(A_{Ctag}/A_{Su}).C_{tag}(t)$, wobei das resultierende Signal $S(t)$ durch Addition des ersten Nutzsignals $S_u(t)$ und des zweiten Tagging-Signals $C_{tag}(t)$ im Basisband am Ausgang der beiden Generatoren (20, 21) unter Wahrung des Amplitudenverhältnisses $X = A_{Su}/A_{Ctag}$ durch Anwendung der Gewichtung $X = A_{Ctag}/A_{su}$ auf das zweite Tagging-Signal $C_{tag}(t)$ erzielt wird, und anschließend
- Verlagern auf ein Trägersignal $f_0$ und Verstärken um einen Faktor $A_{Su}$ des aus der Mischung entstandenen Signals $S(t)$, um am Ausgang das analoge Gesamtsignal, verstärkt auf dem Träger, $S_{Träger}(t) = [A_{Su}.S_u(t)+(A_{Ctag}).C_{tag}(t)].\cos(2\pi f_0 t)$, zu erzeugen.

5. System nach Anspruch 1, **dadurch gekennzeichnet, dass** die Mittel zur Erzeugung des Signals zusammengesetzt sind aus:
einem einzigen digitalen Generator mit programmierbarem Speicher und einer einzigen Digital-Analog-Umwandlungsstufe zur Verlagerung und Verstärkung,

- wobei der digitale Generator geeignet ist, sequenziell verwendet zu werden, um das erste Nutzsignal $S_u$ und anschließend das zweite Tagging-Signal $C_{tag}$ zu erzeugen
- wobei der digitale Generator einen programmierbaren Speicher besitzt
- und wobei der digitale Generator geeignet ist zum:
- Erzeugen des zweiten Tagging-Signals $C_{tag}(k.T_E)$ und des ersten Nutzsignals $S_u(k.T_E)$ im Basisband zu Abtastzeitpunkten $t = k.T_E$, wobei $T_E$: die AbtastPeriode, k: der Zeitindex des Abtastwertes k, unter Wahrung der Gewichtung $X = A_{Ctag}/A_{Cu}$ am zweiten abgetasteten Tagging-Signal $C_{tag}(k.T_E)$, und anschließend,
- Erzeugen, in abgetasteter Form, der resultierenden Mischung $S(k.T_E) = S_u(k.T_E)-E(A_{Ctag}/A_{Su}).C_{tag}(k.T_E)$ im Basisband zu den Abtastzeitpunkten $t = k.T_E$
- wobei die Digital-Analog-Umwandlungsstufe zur Verlagerung und Verstärkung geeignet ist, das analoge Gesamtsignal auf dem Trägersignal am Ausgang $S_{Träger}(t) = [A_{Su}.S_u(t)+(A_{Ctag}).C_{tag}(t)].\cos(27\pi f_0 t)$ mithilfe der Digital-Analog-Umwandlung zu erzeugen, welche $S(k.T_E)$ in $S(t)$ verwandelt, der Verlagerung auf ein Trägersignal $f_0$ und der Verstärkung um einen Faktor $A_{Su}$.

6. System nach einem der Ansprüche 1 bis 5, **dadurch gekennzeichnet, dass** der Wert X mindestens -10 dB beträgt, wobei er von - 20 dB bis - 50 dB variiert.

7. System nach einem der Ansprüche 1 bis 6, **dadurch gekennzeichnet, dass** die Vorrichtung zur Erzeugung des Signals $C_{tag}$ ein Mittel umfasst, welches geeignet ist, um PN pseudowillkürliche Codes mit parametrierbarem Pegel, parametrierbarer Periode und parametrierbarer Zusammensetzung zu erzeugen, um das Tagging-Signal zu bilden, wobei die Zusammensetzung unter Verwendung eines der folgenden Verfahren erzielt wird: vollständig willkürlich, durch Simulationen oder durch Berechnungen, durch Schieberegister oder durch Kombinationen zwischen Schieberegistern.

8. System nach Anspruch 7, **dadurch gekennzeichnet, dass** es einen Generator binärer Sequenzen umfasst, welche aus folgender Liste gewählt sind: binäre Sequenzen maximaler Länge, Gold- oder Gold-Typ-Sequenzen, Dual-BCH-Sequenzen, einfache oder erweiterte Kasami-Sequenzen, Mac Eliece-Sequenzen, Barker-Codes wurde jede sonstige Art von pseudowillkürlicher Sequenz, welche anhand algebraischer Verfahren erzeugt wird.

9. System nach einem der Ansprüche 1 ä bis 8, **dadurch gekennzeichnet, dass** die Empfangsmittel eine Datenbank (35) umfassen, welche Codemerkmale umfasst, welche zur Erzeugung des zweiten Tagging-Signals $C_{tag}$ verwendet werden.

10. Sende-Empfangssystem nach einem der Ansprüche 1 bis 8, **dadurch gekennzeichnet, dass** die Empfangsmittel informierte Empfangsmittel sind, welche eine Datenbank (35) umfassen, zusammengesetzt aus den vollständigen Merkmalen und der Zusammensetzung der zur Erzeugung des zweiten Tagging-Signals $C_{tag}$ verwendeten Codes.

11. Verfahren zum Funk-Tagging eines Senders eines ersten Nutzsignals $S_u$ durch ein zweites Tagging-Signal $C_{tag}$, welches parametrierbare Zeit-und Frequenzmerkmale umfasst, wobei das zweite Tagging-Signal gleichzeitig als Begleitung des ersten Nutzsignals $S_u$ ausgesendet wird, wobei der Sender in einem System arbeitet, welches mehrere autorisierte und dazu geeignete Benutzer umfasst, das zweite Tagging-Signal zu erkennen, **dadurch gekennzeichnet, dass** es mindestens folgende Schritte umfasst:

- Erzeugen eines ersten Nutzsignals $S_u$ in einem gegebenen Frequenzband B, mit einer Frequenz $f_{Su}$ und einer Amplitude $A_{Su}$, und
- in der Kenntnis zumindest der Werte des Bandparameters $B_{Su}$ des ersten Nutzsignals $S_u$ und der Amplitude $A_{Su}$ des Nutzsignals $S_u$, Bestimmen, anhand dieser Werte, der Parameter des zweiten Tagging-Signals $C_{tag}$, welche Folgendes umfassen:
- ein Trägersignal des zweiten Tagging-Signals $C_{tag}$,
- ein Band $B_{Ctag}$ des zweiten Tagging-Signals $C_{tag}$,
- die Amplitude $A_{Ctag}$ des zweiten Tagging-Signals $C_{tag}$ mit einem Signalpegel, welcher um X dB niedriger als das erste Nutzsignal ist $X=A_{Ctag}/A_{Su}$,
- wobei die Zeitmerkmale des zweiten Tagging-Signals $C_{tag}$ Folgendes enthalten:

• die Modulationsmerkmale des zweiten Tagging-Signals: eine Konstellation, einen Rhythmus $R_{Ctag}$, eine Filterung bei der Aussendung,
• eine Dauer und eine Wiederholungsperiode $T_{Ctag}$,
• die Beschreibung seines Aufbaus über die Wiederholungsperiode $T_{Ctag}$, welche geeignet ist, die Regenerierung innerhalb der autorisierten Empfänger für den Bedarf ihrer Verarbeitungen zu ermöglichen,

- gleichzeitiges Aussenden (25) des ersten Signals $S_u$ und des zweiten Tagging-Signals, dessen Pegel um X dB niedriger als derjenige des ersten Nutzsignals $S_u$ ist,
- Diskriminieren (30, 31, 32), beim Empfang des Signals, des zweiten Tagging-Signals des Nutzsignals vom ersten Nutzsignal.

12. Verfahren nach Anspruch 11, **dadurch gekennzeichnet, dass** das Verfahren unterschiedliche Erzeugungsmittel zum Erzeugen des ersten Nutzsignals $S_u$ und des zweiten Tagging-Signals $C_{tag}$ verwendet.

13. Verfahren nach einem der Ansprüche 11 oder 12, **dadurch gekennzeichnet, dass** das Verfahren ein resultierendes Signal im Zeitpunkt t $S(t)=S_u(t)+(A_{Ctag}/A_{Su}).C_{tag}(t)$ erzeugt, verlagert auf ein Trägersignal $f_0$ und verstärkt um einen Faktor $A_{Su}$, um am Ausgang ein verstärktes Signal auf Trägersignal $S_{Träger}(t)$ $[A_{Su}.S_u(t)+(A_{Ctag}).C_{tag}(t)].cos(27cf_0t)$ zu erzielen, wobei das resultierende Signal $S(t)$ durch Addition der Signale im Basisband am Ausgang zweier analoger oder digitaler Generatoren (20, 21) erzielt wird, unter Wahrung der Amplituden $A_{Su}$ und $A_{Ctag}$ durch Anwendung einer Gewichtung $X = A_{Ctag}/A_{Su}$ auf das zweite Tagging-Signal in dem resultierenden Signal.

14. Verfahren nach einem der Ansprüche 11 bis 13, **dadurch gekennzeichnet, dass** ein gewählter Wert X mindestens -10 dB beträgt, wobei er vorzugsweise von - 20 dB bis - 50 dB variiert.

15. Verfahren nach einem der Ansprüche 11 bis 14, **dadurch gekennzeichnet, dass** das Verfahren pseudowillkürliche PN Codes mit parametrierbarem Pegel, parametrierbarer Periode und parametrierbarer Zusammensetzung erzeugt, um das zweite Tagging-Signal zu bilden.

16. Verfahren nach einem der Ansprüche 11 bis 15, **dadurch gekennzeichnet, dass** das Verfahren Merkmale von in einer Datenbank (35) gespeicherten Codes verwendet, um beim Empfang des Signals das zweite Tagging-Signal $C_{tag}$ vom Nutzsignal zu diskriminieren.

17. Verfahren nach einem der Ansprüche 11 bis 15, **dadurch gekennzeichnet, dass** das Verfahren Folgendes verwendet:

- informierte Empfangsmittel, umfassend eine Datenbank, zusammengesetzt aus den vollständigen Merkmalen und der Zusammensetzung der zur Erzeugung des zweiten Tagging-Signals $C_{tag}$ verwendeten Codes, und
- Detektionstechniken vom Typ signalmerkmalsorientiert, basierend auf dem Einsatz der zyklischen Autokorrelation, wobei die Schätzung des ersten Moments auf das Gebiet der zyklischen Frequenzen nahe am Modulationsrhythmus des zweiten Signals $C_{tag}$ beschränkt ist] auf die Gebiete der Verzögerungen nahe null und nahe der Wiederholungsperiode T des zweiten Signals $C_{tag}$ beschränkt ist, wobei die Schätzung des zweiten Moments auf das Gebiet der zyklischen Frequenzen nahe des Modulationsrhythmus, erhöht um das Doppelte der Trägerfrequenz, beschränkt ist.
- Detektionstechniken vom Typ informiert, basierend auf einer Filterung, welche an das zweite Tagging-Signal $C_{tag}$ angepasst ist.

**Claims**

1. A system for radio frequency tagging a transmitter of a first useful signal $S_u$, by a second tagging signal $C_{tag}$ comprising configurable time and frequency characteristics, said tagging signal being transmitted simultaneously accompanying the first useful signal $S_u$, said transmitter operating in a communication system or network, in a system having multiple users authorized and adapted to recognize the second tagging signal, said system having at least the following elements:

     signal generation means (20, 21, 22) adapted to:

          - produce a first useful signal $S_u$ in a given frequency band B, at a frequency fsu and an amplitude Asu, and
          - know at least the values of the band parameter $B_{Su}$ of the first useful signal $S_u$ and of the amplitude $A_{Su}$ of the first useful signal $S_u$, which are adapted to determine, from said values, the parameters of the second tagging signal $C_{tag}$ comprising:
          - a carrier of the second tagging signal $C_{tag}$,
          - a band $B_{Ctag}$ of the second tagging signal,
          - an amplitude $A_{Ctag}$ of the second tagging signal with a signal level X dB lower than the useful signal X = $A_{Ctag}/A_{Su}$,
          - time characteristics of the second tagging signal $C_{tag}$, including:

               - the modulation characteristics of the second tagging signal: a constellation, a rate $R_{Ctag}$, a filtering in transmission,
               - a duration and a repetition period, $T_{Ctag}$,
               - a description of its construction over the repetition period $T_{Ctag}$,

     a transmission antenna (25) adapted to simultaneously transmit said first useful signal $S_u$ and said second tagging signal, the level of which is X dB lower than the first useful signal $S_u$,
     means for receiving and processing (30, 31, 32) the first useful signal and the second tagging signal, which are adapted to detect and to discriminate the second tagging signal from the first useful signal.

2. The system according to claim 1, **characterized in that** the signal generation means have:

     - a first generator (20) adapted to produce said first useful signal $S_u$ in a given frequency band $B_{Su}$, at a frequency $f_{Su}$ and an amplitude $A_{Su}$,
     - a second generator (21) which knows at least the values of the band parameter $B_{Su}$ of the first useful signal $S_u$ and of the amplitude $A_{Su}$ of the first useful signal $S_u$, adapted to determine, from said values, the parameters of the second tagging signal $C_{tag}$:

          - the carrier of $C_{tag}$,
          - the band $B_{Ctag}$ of $C_{tag}$,
          - the amplitude $A_{Ctag}$ of $C_{tag}$,
          - the time characteristics of the second tagging signal, including a modulation rate (denoted $R_{Ctag}$), a repetition period, denoted $T_{Ctag}$,
          - the description of its precise construction over a period $T_{Ctag}$,

     - a store/re-transmit system (22), or a digital exciter (22), receiving the first useful signal $S_u$ and the second tagging signal $C_{tag}$ and adapted to re-transmit said signals by controlling the amplitudes and the synchronisms thereof.

3. The system according to any one of claim 1 or claim 2, **characterized in that** it comprises a means for preliminary storing in base band the second tagging signal $C_{tag}$ over a repetition period $T_{Ctag}$, adapted to allow rereading in authorized receivers for the purposes of their processing operations.

4. The system according to any one of claim 1 or claim 2, **characterized in that** generation and transmission means of the first useful signal and second tagging signal are adapted:

     - to produce:

- a base band signal,
- a resultant signal at the time t, wherein $S(t) = S_u(t)+(A_{Ctag}/A_{Su}).C_{tag}(t)$, said resultant signal $S(t)$ being obtained by adding the first useful signal $S_u(t)$ and second tagging signal $C_{tag}(t)$ in base band at the output of the two generators (20, 21), while observing the ratio of the amplitudes $X = A_{Su}/A_{Ctag}$ by applying the weighting $X = A_{Ctag}/A_{Su}$ to the second tagging signal $C_{tag}(t)$, then

- to transpose onto a carrier $f_0$ and to amplify by a factor $A_{Su}$ the signal $S(t)$ resulting from the mixing, in order to output the total analog signal, amplified on carrier, $S_{carrier}(t) = [A_{su}.S_u(t)+(A_{Ctag}).C_{tag}(t)].cos(2\pi f_0 t)$.

5. The system according to claim 1, **characterized in that** the signal generation means are composed:
of a single digital generator with programmable memory and of a single transposition and amplification digital-analog conversion stage,

- said digital generator is adapted to be used sequentially in order to generate the first useful signal $S_u$ then the second tagging signal $C_{tag}$,
- said digital generator has a programmable memory,
- and said digital generator is adapted to:

- generate the second tagging signal $C_{tag}(k.T_E)$ and the first useful signal $S_u(k.T_E)$ in base band at the sampling times $t = k.T_E$ with $T_E$: the sampling period, k: the time index of the sample k, while observing the weighting $X = A_{Ctag}/A_{Cu}$ on the sampled second tagging signal $C_{tag}(k.T_E)$, then,
- - generate, in sampled form, the resultant mix $S(k.T_E) = S_u(k.T_E)+(A_{Ctag}/A_{su}).C_{tag}(k.T_E)$ in base band at the sampling times $t = k.T_E$,

- said transposition and amplification digital-analog conversion stage being adapted to output the total analog signal on carrier $S_{Carrier}(t) = [A_{Su}.S_u(t)+(A_{Ctag}).C_{tag}(t)].cos(2\pi f_0 t)$ using the digital-analog conversion transforming $S(k.T_E)$ into $S(t)$, the transposition onto carrier $f_0$, and the amplification by a factor $A_{Su}$.

6. The system according to one of claims 1 to 5, **characterized in that** the value of X is at least equal to -10 dB, and preferably varies from -20 dB to -50 dB.

7. The system according to one of claims 1 to 6, **characterized in that** the device for generating the signal $C_{tag}$ comprises a means adapted to generate PN pseudo-random codes, of configurable level, period and composition to form the tagging signal, said composition being obtained by using one of the following methods: totally arbitrary, by simulations or by computations, by shift registers or by combinations between shift registers.

8. The system according to claim 7, **characterized in that** it has a generator of binary sequences chosen from the following: binary sequences of maximum length, Gold or Gold-type sequences, dual-BCH sequences, simple or extended Kasami sequences, Mac Eliece sequences, Barker codes, or any other type of pseudo-random sequence generated by algebraic methods.

9. The system according to one of claims 1 to 8, **characterized in that** the reception means have a database (35) comprising characteristics of codes used for the generation of the second tagging signal $C_{tag}$.

10. The transmission-reception system according to one of claims 1 to 8, **characterized in that** the reception means are informed reception means, comprising a database (35) made up of the complete characteristics and of the composition of the codes used for the generation of the second tagging signal $C_{tag}$.

11. A method for radio frequency tagging a transmitter of a first useful first signal $S_u$, by a second tagging second signal $C_{tag}$ comprising configurable time and frequency characteristics, said second tagging signal being transmitted simultaneously accompanying the first useful signal $S_u$, said transmitter operating in a system comprising multiple users authorized and adapted to recognize the second tagging signal, **characterized in that** it has at least the following steps:

- producing a first useful signal $S_u$ in a given frequency band B, at a frequency $f_{Su}$ and an amplitude $A_{Su}$, and
- knowing at least the values of the band parameter $B_{Su}$ of the first useful signal $S_u$ and of the amplitude $A_{Su}$ of the first useful signal $S_u$, determining, from said values, the parameters of the second tagging signal $C_{tag}$, comprising:

- a carrier of the second tagging signal $C_{tag}$,
- a band $B_{Ctag}$ of the second tagging signal $C_{tag}$,
- the amplitude $A_{Ctag}$ of the second tagging signal $C_{tag}$ with a signal level X dB lower than the first useful signal $X = A_{Ctag}/A_{Su}$,
- the time characteristics of the second tagging signal $C_{tag}$, containing:

  • the modulation characteristics of the second tagging signal: a constellation, a rate $R_{Ctag}$, a filtering in transmission,
  • a duration and a repetition period, $T_{Ctag}$,
  • the description of its construction over the repetition period $T_{Ctag}$ adapted to allow regeneration in the authorized receivers for the purposes of their processing operations,

- simultaneously transmitting (25) said first signal $S_u$ and said second tagging signal, the level of which is X dB lower than the first useful signal $S_u$,
- discriminating (30, 31, 32), at the signal reception level, the second tagging signal of the useful signal from the first useful signal.

**12.** The method according to claim 11, **characterized in that** the method uses distinct generation means to produce the first useful signal $S_u$ and the second tagging signal $C_{tag}$.

**13.** The method according to one of claim 11 or claim 12, **characterized in that** the method generates a resultant signal at the time t $S(t) = S_u(t)+(A_{Ctag}/A_{su})\cdot C_{tag}(t)$ that is transposed onto a carrier $f_0$ and amplified by a factor $A_{Su}$, to obtain a signal on carrier amplified at the output $S_{Carrier}(t) = [A_{su}\cdot S_u(t)+(A_{Ctag})\cdot C_{tag}(t)]\cdot\cos(2\pi f_0 t)$, said resultant signal $S(t)$ being obtained by the addition of the base band signals at the output of two analog or digital generators (20, 21), by observing the amplitudes $A_{Su}$ and $A_{Ctag}$ by applying a weighting $X = A_{Ctag}/A_{Su}$ to the second tagging signal in the resultant signal.

**14.** The method according to one of claims 11 to 13, **characterized in that** a value of X is chosen to be at least equal to -10 dB, and preferably varying from -20 dB to -50 dB.

**15.** The method according to one of claims 11 to 14, **characterized in that** the method generates pseudo-random PN codes of configurable level, period and composition, to form the second tagging signal.

**16.** The method according to one of claims 11 to 15, **characterized in that** the process uses codes characteristics stored in a database in order to discriminate, at the signal reception level, the second tagging signal $C_{tag}$ from the useful signal.

**17.** The method according to one of claims 11 to 15, **characterized in that** the method uses:

- informed reception means, comprising a database made up of the complete characteristics and of the composition of the codes used for the generation of the second tagging signal $C_{tag}$, and
- detection techniques of a type oriented towards the characteristics of the signal, based on the use of cyclical self-correlation, the estimation of the first moment being restricted to the range of the cyclical frequencies close to the modulation rate of the second signal $C_{tag}$ restricted to the ranges of the delays which are close to zero and close to the repetition period T of the second signal $C_{tag}$, the estimation of the second moment being restricted to the range of the cyclical frequencies close to the modulation rate increased by twice the carrier frequency,
- detection techniques of informed type, based on filtering adapted to the second tagging signal $C_{tag}$.

$S_u$

12

14

11

10

$C_{tag}$

## FIG.1

12 dB

$\eta$

SORTIE DE TRAITEMENT

SNR'($S_u$) = inchangé

SNR'($C_{tag}$) = 32 dB

SINR'($C_{tag}$) $\geq$ 22 dB

## FIG.4

20
$S_u$

x 1

22

23

24
*$A_{Su}$

25
Antenne
émission

x ($A_{Ctag}/A_{su}$)

21
$C_{tag}$

$A_{Su}S_u(t) +$
$A_{Ctag} C_{tag}(t)$

$\alpha$ ($A_{Su}S_u(t)+A_{Ctag} C_{tag}(t)$)

Antenne
Réception
30

35 BD signaux $C_{tag}$

31

32

Pic de
détection
du signal $C_{tag}$
reconnu

Marge $\eta$

Plancher bruit

FIG.2

Signal $C_{tag}$
$B_{Ctag}$= 20 MHz ;
$T_{Ctag}{\approx}1{,}64$ ms,
Code PN
Période env. 32748 ;
10 og($B_{Ctag}T_{Ctag}$)=45 dB

ENTREE DE TRAITEMENT
SNR($S_u$) = 8 dB
SNR($C_{tag}$) = -13 dB
SINR($C_{tag}$) = -21,6 dB

FIG.3

EP 2 920 604 B1

FIG.5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20100246825 A

- FR 2629655 A1

**Littérature non-brevet citée dans la description**

- Radio frequency watermarking for OFDM wireless networks'', frequency watermarking for OFDM wireless networks. **KLEIDER J E et al.** ACOUSTICS, SPEECH, AND SIGNAL PROCESSING,2004. PROCEEDINGS. (ICASSP ' 04). IEEE, H04L9/32INTERNATIONAL CONFERENCE ON MONTREAL. IEEE, 17 Mai 2004, vol. 5, H04B1, , 59397400

- **MM. SARWATE ; PURSLEY.** Cross correlation Properties of Pseudorandom and Related Sequences. *Proc. IEEE,* Mai 1980, vol. 68, 593-619